# FASCICULE DE BREVET EUROPEEN

(11) **EP 4 363 321 B1**
(45) Date de publication et mention de la délivrance du brevet: **18.12.2024**
(21) Numéro de dépôt: 23733015.4
(22) Date de dépôt: 27.06.2023
(51) Int. Cl.: B64F 1/35

(54) **MODULE D'ALIMENTATION ÉLECTRIQUE À REBOUCLAGE ET DOUBLE SORTIE**
ENERGIEVERSORGUNGSMODUL MIT EINER RÜCKKOPPLUNGSSCHLEIFE UND EINEM DUALEN AUSGANG
POWER SUPPLY MODULE WITH LOOPBACK AND DUAL OUTPUT

(30) Priorité: 27.06.2022 FR 2206363
(43) Date de publication de la demande: 08.05.2024
(73) Titulaire: Guinault SA, 45590 Saint-Cyr-en-Val (FR)
(72) Inventeur: QARISH, Issa, 45590 SAINT CYR EN VAL (FR); CLERMONT, Lionel, 45110 CHATEAUNEUF SUR LOIRE (FR)
(74) Mandataire: Argyma
(86) Numéro de dépôt international: PCT/EP2023/067386
(87) Numéro de publication internationale: WO 2024/003005

(56) Documents cités:
- EP-A1- 3 228 546
- EP-A1- 3 232 533
- EP-A1- 3 840 167

## Description

### Domaine technique

La présente invention se rapporte au domaine de la recharge d'équipements électriques, notamment de maintenance aéronautique, et concerne plus particulièrement un module d'alimentation électrique.

### Technique antérieure

Dans un aéroport, les batteries des équipements électriques, notamment des équipements électriques mobiles et autonomes, ont besoin d'être chargées régulièrement. Par exemple, il peut être nécessaire de charger un tracteur de type « push-back » à l'arrêt devant l'avion afin qu'il puisse ensuite pousser l'avion lors de son départ du point de stationnement, pendant qu'une unité de puissance au sol, appelée communément GPU (Ground Power Unit), alimente l'avion. Il peut également être nécessaire de charger une passerelle mobile électrique, par exemple dans les mêmes conditions.

Cependant, de nos jours, la charge des batteries des équipements électriques dans un aéroport peut constituer une difficulté importante, car les points de charge sont peu nombreux.

Le document EP3232533A1 décrit un exemple d'unité de puissance au sol connue selon le préambule de la revendication 1.

Il existe donc un besoin d'une solution simple et efficace permettant de remédier au moins en partie à ces inconvénients.

### Exposé de l'invention

A cette fin, l'invention a tout d'abord pour objet une unité de puissance au sol (aussi appelé « générateur électrique au sol » ou GPU) pour aéronef, ladite unité de puissance au sol comprenant une entrée d'alimentation électrique, un convertisseur alternatif-continu relié électriquement à ladite entrée d'alimentation électrique, un module de stockage d'énergie électrique relié électriquement audit convertisseur alternatif-continu, un convertisseur continu-alternatif relié électriquement audit module de stockage et une première sortie d'alimentation électrique reliée électriquement audit convertisseur continu-alternatif, ledit convertisseur alternatif-continu étant configuré pour convertir une tension électrique alternative en une tension électrique continue, ledit module de stockage d'énergie électrique étant configuré pour stocker de l'énergie électrique à partir de la tension électrique continue fournie par le convertisseur alternatif-continu et pour délivrer au convertisseur continu-alternatif une tension électrique continue généré à partir d'énergie électrique stockée, le convertisseur continu-alternatif étant configuré pour convertir la tension électrique continue reçue du module de stockage en une tension électrique alternative disponible sur la première sortie d'alimentation électrique pour alimenter l'aéronef, l'unité de puissance au sol étant remarquable en ce qu'elle comprend en outre une connexion électrique, reliant la sortie du convertisseur continu-alternatif à l'entrée du convertisseur alternatif-continu, et une deuxième sortie d'alimentation électrique reliée électriquement à la sortie du convertisseur alternatif-continu, et en ce que le convertisseur alternatif-continu est configuré pour convertir la tension électrique alternative reçue de la sortie du convertisseur continu-alternatif en une tension électrique continue disponible sur ladite deuxième sortie d'alimentation électrique afin de charger une batterie d'un équipement électrique.

L'unité de puissance au sol selon l'invention permet donc avantageusement d'alimenter à la fois un premier équipement électrique à partir d'une tension électrique alternative, par exemple un aéronef, et un deuxième équipement électrique, notamment simultanément, à partir d'une tension électrique continue en rebouclant la sortie du convertisseur continu-alternatif sur l'entrée du convertisseur alternatif-continu.

Avantageusement, le convertisseur alternatif-continu est configuré pour délivrer sur la deuxième sortie d'alimentation électrique une tension électrique continue générée à partir d'une tension électrique alternative reçue sur l'entrée d'alimentation électrique, afin de charger une batterie de l'équipement électrique à batterie.

Avantageusement encore, l'unité de puissance au sol est configurée pour réaliser simultanément l'alimentation électrique de l'aéronef à partir de la tension électrique alternative disponible sur la première sortie d'alimentation électrique et la charge de la batterie de l'équipement électrique à partir de la tension électrique continue disponible sur la deuxième sortie d'alimentation électrique. La tension électrique continue fournie sur la deuxième sortie d'alimentation électrique par le convertisseur alternatif-continue peut être obtenue par conversion d'une tension électrique alternative reçue sur l'entrée d'alimentation ou bien reçue du convertisseur continu-alternatif.

De manière avantageuse, l'unité de puissance au sol comprend un transformateur connecté en série sur la connexion électrique entre la sortie du convertisseur continu-alternatif et l'entrée du convertisseur alternatif-continu, ledit transformateur étant configuré pour modifier la valeur de la tension électrique alternative de sortie du convertisseur continu-alternatif en une tension dont la valeur est comprise dans une plage de valeurs de tension prédéterminée.

L'invention concerne également un système de charge électrique comprenant une unité de puissance au sol, tel que présentée précédemment, et un équipement électrique à batterie, connecté électriquement à la deuxième sortie d'alimentation électrique.

Dans une forme de réalisation, le système de charge électrique comprend en outre un aéronef connecté électriquement à la première sortie d'alimentation électrique.

L'invention concerne également un procédé d'alimentation électrique d'un équipement électrique à batterie par une unité de puissance au sol pour aéronef tel que présentée précédemment, ledit procédé comprenant les étapes de :
- fourniture, par le module de stockage, au convertisseur continu-alternatif, d'une tension électrique continue générée à partir d'énergie électrique stockée dans ledit module de stockage,
- conversion, par le convertisseur continu-alternatif, de la tension électrique continue reçue du module de stockage en une tension électrique alternative,
- fourniture, par le convertisseur continu-alternatif, via la connexion électrique, de ladite tension électrique alternative au convertisseur alternatif-continu,
- conversion, par le convertisseur alternatif-continu, de la tension électrique alternative reçue du convertisseur continu-alternatif en une tension électrique continue,
- fourniture, par le convertisseur alternatif-continu, de ladite tension électrique continue sur la deuxième sortie d'alimentation électrique,

De préférence, le procédé comprend une étape de charge électrique de la batterie de l'équipement électrique à batterie avec la tension électrique continue fournie sur la deuxième sortie d'alimentation électrique.

Dans un mode de réalisation, le procédé comprend, simultanément à la fourniture par le convertisseur alternatif-continu d'une tension électrique continue sur la deuxième sortie d'alimentation électrique, une étape de fourniture par le convertisseur continu-alternatif de la tension électrique alternative sur la première sortie d'alimentation électrique

Dans un mode de réalisation, le procédé comprend une étape d'alimentation électrique de l'aéronef à partir de la tension électrique alternative fournie sur la première sortie d'alimentation électrique.

Selon un aspect de l'invention, le procédé comprend, préalablement à l'étape de fourniture, par le module de stockage, au convertisseur continu-alternatif, d'une tension électrique continue générée à partir d'énergie électrique stockée dans ledit module de stockage, les étapes de :
- réception, via l'entrée d'alimentation électrique, d'une tension électrique alternative d'entrée fournie par une source d'alimentation électrique externe,
- conversion, par le convertisseur alternatif-continu, de ladite tension électrique alternative d'entrée en une tension électrique continue,
- réception, par le module de stockage, de ladite tension électrique continue,
- stockage, par le module de stockage, de l'énergie électrique délivrée par ladite tension électrique continue reçue.

L'invention concerne également un procédé d'alimentation électrique d'un équipement électrique à batterie par une unité de puissance au sol pour aéronef tel que présentée précédemment, ledit procédé comprenant les étapes de :
- réception, via l'entrée d'alimentation électrique, d'une tension électrique alternative d'entrée,
- conversion, par le convertisseur alternatif-continu, de ladite tension électrique alternative d'entrée en une tension électrique continue de charge d'une batterie de l'équipement électrique externe,
- fourniture, par le convertisseur alternatif-continu, de ladite tension électrique continue de charge sur la deuxième sortie d'alimentation électrique.

De préférence, le procédé comprend une étape de charge électrique de la batterie de l'équipement électrique à batterie à partir de la tension électrique continue fournie sur la deuxième sortie d'alimentation électrique.

Avantageusement, le procédé comprend, simultanément à la fourniture par le convertisseur alternatif-continu d'une tension électrique continue sur la deuxième sortie d'alimentation électrique, une étape de fourniture, par le module de stockage, au convertisseur continu-alternatif, d'une tension électrique continue générée à partir d'énergie électrique stockée dans ledit module de stockage, une étape de conversion, par le convertisseur continu-alternatif, de la tension électrique continue reçue du module de stockage en une tension électrique alternative et une étape de fourniture par le convertisseur continu-alternatif de la tension électrique alternative sur la première sortie d'alimentation électrique et, de préférence, une étape d'alimentation électrique de l'aéronef à partir de la tension fournie sur la première sortie d'alimentation électrique.

Un mode de réalisation non couvert par les revendications concerne également un produit programme d'ordinateur caractérisé en ce qu'il comporte un ensemble d'instructions de code de programme qui, lorsqu'elles sont exécutées par un ou plusieurs processeurs, configurent le ou les processeurs pour mettre en oeuvre un procédé tel que présenté précédemment.

Un mode de réalisation non couvert par les revendications concerne également un module d'alimentation électrique en tension continue et en tension alternative, ledit module d'alimentation électrique comprenant une entrée d'alimentation électrique, un convertisseur alternatif-continu relié électriquement à ladite entrée d'alimentation électrique, un module de stockage d'énergie électrique relié électriquement audit convertisseur alternatif-continu, un convertisseur continu-alternatif relié électriquement audit module de stockage et une première sortie d'alimentation électrique reliée électriquement audit convertisseur continu-alternatif, ledit convertisseur alternatif-continu étant configuré pour convertir une tension électrique alternative en une tension électrique continue, le module de stockage étant configuré pour stocker de l'énergie électrique à partir de la tension électrique continue fournie par le convertisseur alternatif-continu et pour délivrer au convertisseur continu-alternatif une tension électrique continue généré à partir d'énergie électrique stockée, le convertisseur continu-alternatif étant configuré pour convertir la tension électrique continue reçue du module de stockage en une tension électrique alternative disponible sur la première sortie d'alimentation électrique pour alimenter un premier équipement électrique fonctionnant en tension électrique alternative, le module d'alimentation électrique étant remarquable en ce qu'il comprend en outre une connexion électrique, reliant la sortie du convertisseur continu-alternatif à l'entrée du convertisseur alternatif-continu, et une deuxième sortie d'alimentation électrique reliée électriquement à la sortie du convertisseur alternatif-continu, et en ce que le convertisseur alternatif-continu est configuré pour convertir la tension électrique alternative reçue de la sortie du convertisseur continu-alternatif en une tension électrique continue disponible sur ladite deuxième sortie d'alimentation électrique afin charger une batterie d'un deuxième équipement électrique.

Le module d'alimentation électrique peut être une unité de puissance au sol, comme décrit ci-avant, ou bien tout autre équipement dont l'application peut avantageusement nécessiter la fourniture d'une tension alternative et d'une tension continue, notamment simultanément.

Dans une forme de réalisation, le convertisseur alternatif-continu est configuré pour délivrer sur la deuxième sortie d'alimentation électrique une tension électrique continue générée à partir d'une tension électrique alternative reçue sur l'entrée d'alimentation électrique.

Avantageusement, le module d'alimentation électrique est configuré pour réaliser simultanément l'alimentation électrique du premier équipement électrique à partir de la tension électrique alternative disponible sur la première sortie d'alimentation électrique et l'alimentation du deuxième équipement électrique à partir de la tension électrique continue disponible sur la deuxième sortie d'alimentation électrique. La tension électrique continue fournie sur la deuxième sortie d'alimentation électrique par le convertisseur alternatif-continue peut être obtenue par conversion d'une tension électrique alternative reçue sur l'entrée d'alimentation ou bien reçue du convertisseur continu-alternatif.

Dans une forme de réalisation, le module d'alimentation électrique comprend un transformateur connecté en série sur la connexion électrique entre la sortie du convertisseur continu-alternatif et l'entrée du convertisseur alternatif-continu, ledit transformateur étant configuré pour modifier la valeur de la tension électrique alternative de sortie du convertisseur continu-alternatif en une tension dont la valeur est comprise dans une plage de valeurs de tension prédéterminée.

Un mode de réalisation non couvert par les revendications concerne également un système de charge électrique comprenant un module d'alimentation électrique, tel que présenté précédemment, destiné à alimenter électriquement un premier équipement électrique via la première sortie d'alimentation électrique, et un deuxième équipement électrique, connecté électriquement à la deuxième sortie d'alimentation électrique.

Un mode de réalisation non couvert par les revendications concerne également un procédé d'alimentation électrique par un module de recharge électrique tel que présenté précédemment, adapté pour alimenter électriquement un premier équipement électrique à partir d'une tension électrique alternative et un deuxième équipement électrique à partir d'une tension électrique continue, ledit procédé comprenant les étapes de :
- fourniture, par le module de stockage, au convertisseur continu-alternatif, d'une tension électrique continue générée à partir d'énergie électrique stockée dans ledit module de stockage,
- conversion, par le convertisseur continu-alternatif, de la tension électrique continue reçue du module de stockage en une tension électrique alternative,
- fourniture, par le convertisseur continu-alternatif, via la connexion électrique, de ladite tension électrique alternative au convertisseur alternatif-continu,
- conversion, par le convertisseur alternatif-continu, de la tension électrique alternative reçue du convertisseur continu-alternatif en une tension électrique continue,
- fourniture, par le convertisseur alternatif-continu, de ladite tension électrique continue sur la deuxième sortie d'alimentation électrique.

De préférence, le procédé comprend en outre l'alimentation électrique du deuxième équipement électrique avec la tension électrique continue fournie sur la deuxième sortie d'alimentation électrique.

Avantageusement, le procédé comprend, simultanément à la fourniture par le convertisseur alternatif-continu d'une tension électrique continue sur la deuxième sortie d'alimentation électrique et une étape de fourniture par le convertisseur continu-alternatif de la tension électrique alternative sur la première sortie d'alimentation électrique.

De préférence, le procédé comprend une étape d'alimentation électrique du premier équipement électrique à partir de la tension fournie sur la première sortie d'alimentation électrique.

Avantageusement, le procédé comprend, préalablement à l'étape de fourniture, par le module de stockage, au convertisseur continu-alternatif, d'une tension électrique continue générée à partir d'énergie électrique stockée dans ledit module de stockage, les étapes de :
- réception, via l'entrée d'alimentation électrique, d'une tension électrique alternative d'entrée fournie par une source d'alimentation électrique externe,
- conversion, par le convertisseur alternatif-continu, de ladite tension électrique alternative d'entrée en une tension électrique continue,
- réception, par le module de stockage, de ladite tension électrique continue,
- stockage, par le module de stockage, de l'énergie électrique délivrée par ladite tension électrique continue reçue.

Un mode de réalisation non couvert par les revendications concerne également un procédé d'alimentation électrique par un module d'alimentation électrique tel que présenté précédemment adapté pour alimenter électriquement un premier équipement électrique fonctionnant à partir d'une tension alternative et un deuxième équipement électrique comportant une batterie, ledit procédé comprenant les étapes de :
- réception, via l'entrée d'alimentation électrique, d'une tension électrique alternative d'entrée,
- conversion, par le convertisseur alternatif-continu, de ladite tension électrique alternative d'entrée en une tension électrique continue,
- fourniture, par le convertisseur alternatif-continu, de ladite tension électrique continue de charge sur la deuxième sortie d'alimentation électrique.

De préférence, le procédé comprend une étape de charge électrique de la batterie du deuxième équipement électrique à partir de la tension électrique continue fournie sur la deuxième sortie d'alimentation électrique.

Avantageusement, le procédé comprend, simultanément à la fourniture par le convertisseur alternatif-continu d'une tension électrique continue sur la deuxième sortie d'alimentation électrique, une étape de fourniture, par le module de stockage, au convertisseur continu-alternatif, d'une tension électrique continue générée à partir d'énergie électrique stockée dans ledit module de stockage, une étape de conversion, par le convertisseur continu-alternatif, de la tension électrique continue reçue du module de stockage en une tension électrique alternative, une étape de fourniture par le convertisseur continu-alternatif de la tension électrique alternative sur la première sortie d'alimentation électrique et, de préférence, une étape d'alimentation électrique du premier équipement électrique à partir de la tension électrique alternative fournie sur la première sortie d'alimentation électrique.

Un mode de réalisation non couvert par les revendications concerne également un produit programme d'ordinateur caractérisé en ce qu'il comporte un ensemble d'instructions de code de programme qui, lorsqu'elles sont exécutées par un ou plusieurs processeurs, configurent le ou les processeurs pour mettre en oeuvre un procédé tel que présenté précédemment.

### Brève description des dessins

D'autres caractéristiques et avantages de l'invention apparaîtront encore à la lecture de la description qui va suivre. Celle-ci est purement illustrative et doit être lue en regard des dessins annexés sur lesquels :
[Fig.1] La [Fig.1] illustre schématiquement une forme de réalisation du système selon l'invention.
[Fig.2] La [Fig.2] illustre schématiquement une forme de réalisation de l'unité de puissance au sol selon l'invention.
[Fig.3] La [Fig.3] illustre schématiquement un mode de réalisation du procédé selon l'invention.

### Description des modes de réalisation

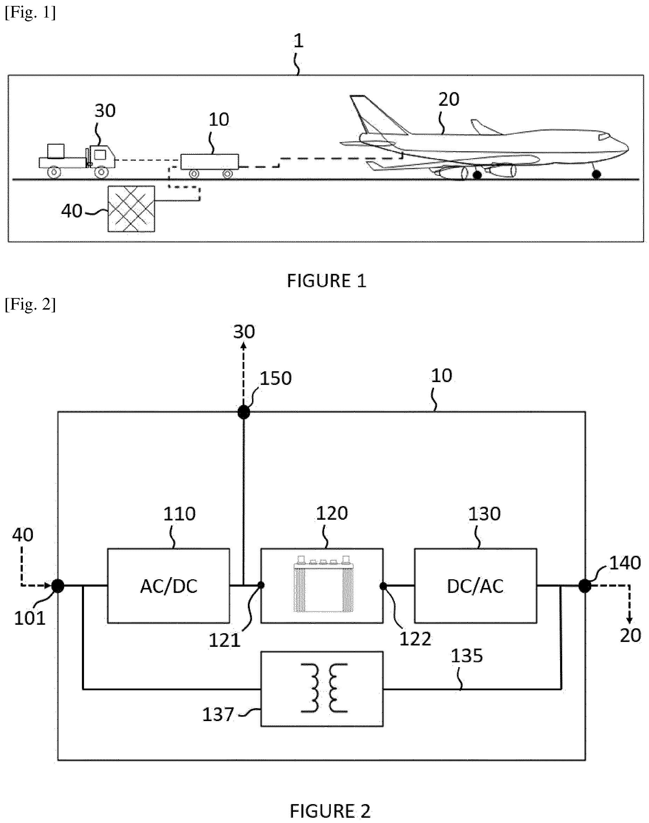

On a représenté à la [Fig.1] un exemple de système 1 selon l'invention. Le système 1 comprend un module d'alimentation électrique se présentant dans cet exemple sous la forme d'une unité de puissance au sol 10, un premier équipement électrique fonctionnant à partir d'une tension électrique alternative et se présentant sous la forme d'un aéronef 20, et un deuxième équipement électrique 30 à batterie. Dans une autre forme de réalisation, le premier équipement électrique pourrait être tout type d'équipement fonctionnant à partir d'une tension électrique alternative, par exemple en monophasé 50 Hz.

Le système 1 comprend en outre dans cet exemple une source d'alimentation électrique externe 40 adaptée pour être reliée électriquement à l'unité de puissance au sol 10, par exemple via un câble et un connecteur (non représentés) afin de lui fournir une tension électrique alternative (de type AC pour Alternative Current).

### Unité de puissance au sol 10

L'unité de puissance au sol 10 permet d'alimenter électriquement l'aéronef 20 lorsque ledit aéronef 20 est stationné à un point de stationnement d'un aéroport entre deux rotations. Cette alimentation électrique permet d'alimenter en énergie électrique l'aéronef pour assurer le fonctionnement de divers équipements électriques de l'aéronef 20 tel que par exemple les dispositifs d'éclairage de la cabine, les dispositifs multimédias pour les passagers, le système de climatisation de la cabine, etc. Cette alimentation électrique est réalisée de préférence à partir d'une tension de sortie alternative délivrée par l'unité de puissance au sol 10, par exemple triphasée d'environ 200 V (entre phases) à 400 Hz.

En référence à la [Fig.2], l'unité de puissance au sol 10 comprend une entrée d'alimentation électrique 101, un convertisseur alternatif-continu 110, un module de stockage 120 d'énergie électrique, un convertisseur continu-alternatif 130, une connexion électrique 135, une première sortie d'alimentation électrique 140 et une deuxième sortie d'alimentation électrique 150. Dans cet exemple non limitatif, l'unité de puissance au sol 10 comprend en outre un transformateur 137.

### Entrée d'alimentation électrique 101

L'entrée d'alimentation électrique 101 est reliée électriquement à l'entrée du convertisseur alternatif-continu 110 afin de lui fournir une tension électrique alternative, monophasée ou triphasée, lorsque ladite entrée d'alimentation électrique 101 est connectée à une source d'alimentation électrique externe 40 (qui sera décrite ci-après).

L'entrée d'alimentation électrique 101 peut comprendre un ou plusieurs connecteurs d'entrée. Par exemple, un connecteur peut être adapté pour recevoir une tension de 400 V à une fréquence de 50 Hz ou une tension de 480 V à 60 Hz ou une tension de 200 V à 400 Hz qui sont des tensions standards délivrées dans les aéroports, notamment sur les pistes, par exemple par un réseau électrique ou une machine dédiée.

### Convertisseur alternatif-continu 110

Le convertisseur alternatif-continu 110 est reliée électriquement à une entrée de charge 121 du module de stockage 120.

Le convertisseur alternatif-continu 110 est configuré pour convertir une tension électrique alternative reçue en une tension électrique continue (de type DC ou Direct Current) et pour fournir ladite tension électrique continue sur l'entrée de charge 121 du module de stockage 120 afin de charger électriquement le module de stockage 120. Autrement dit, le convertisseur alternatif-continu 110 permet de convertir la tension alternative reçue en une tension électrique continue dont la valeur est adaptée pour charger le module de stockage 120.

A cette fin, le convertisseur alternatif-continu 110 peut avantageusement comprendre des semi-conducteurs.

### Module de stockage 120

Le module de stockage 120 est configuré pour stocker de l'énergie électrique. A cette fin, le module de stockage 120 comprend par exemple une ou plusieurs batteries électriques de stockage. Une pile à combustible délivrant une tension continue à partir d'hydrogène peut être prévue en parallèle du module de stockage 120 pour augmenter l'autonomie.

L'énergie électrique est stockée à partir de la tension électrique continue délivrée par le convertisseur alternatif-continu 110 sur l'entrée de charge 121.

Le module de stockage 120 comprend, outre l'entrée de charge 12, une sortie de charge 122.

Le module de stockage 120 est configuré pour délivrer au convertisseur continu-alternatif, via la sortie de charge 122, une tension électrique continue générée à partir d'énergie électrique stockée dans ledit module de stockage 120.

### Convertisseur continu-alternatif 130

Le convertisseur continu-alternatif 130 est configuré pour recevoir la tension électrique continue délivrée par le module de stockage 120 via la sortie de charge 122 et pour convertir ladite tension électrique continue en une tension électrique alternative, monophasée ou triphasée. Autrement dit, le convertisseur continu-alternatif 130 permet de convertir la tension électrique continue reçue du module de stockage 120 en une tension électrique alternative dont la valeur et la fréquence sont adaptées pour alimenter l'aéronef 20. A cette fin, le convertisseur continu-alternatif 130 peut avantageusement comprendre des semi-conducteurs.

Le convertisseur continu-alternatif 130 est configuré pour délivrer ladite tension électrique alternative sur la première sortie d'alimentation électrique 140.

Par exemple, la tension électrique alternative peut présenter une tension de 200 V avec une fréquence de 400 Hz, qui est une tension standard de charge de nombreux aéronefs. Lorsque l'unité de puissance au sol 10 n'alimente pas d'aéronef 20, tension et fréquences peuvent être définie uniquement en fonction de la tension souhaitée sur la deuxième sortie d'alimentation électrique 150, indépendamment des critères aéronautiques.

### Connexion électrique 135

La connexion électrique 135 relie la sortie du convertisseur continu-alternatif 130 à l'entrée du convertisseur alternatif-continu 110.

Le convertisseur alternatif-continu 110 est configuré pour convertir la tension électrique alternative reçue de la sortie du convertisseur continu-alternatif 130 via la connexion électrique 135 en une tension électrique continue disponible sur la deuxième sortie d'alimentation électrique 150.

### Transformateur 137 (optionnel)

Le transformateur 137 est connecté en série sur la connexion électrique 135 entre la sortie du convertisseur continu-alternatif 130 et l'entrée du convertisseur alternatif-continu 110.

Le transformateur 137 est configuré pour modifier la valeur de la tension électrique alternative de sortie du convertisseur continu-alternatif 130 en une tension dont la valeur est comprise dans une plage de valeurs de tension prédéterminée, par exemple entre 70 V et 900 V, afin de fournir une tension de charge adaptée au deuxième équipement électrique 30. Par exemple, lorsque la tension électrique alternative en sortie du convertisseur continu-alternatif 130 est de 200 V à 400 Hz, le transformateur 137 est adapté pour fonctionner à 400 Hz. De préférence, le transformateur 137 est multi-tensions c'est-à-dire qu'il peut fournir différentes valeurs de tension.

Avantageusement, l'unité de puissance au sol 10 peut comprendre un module de contrôle (non représenté) configuré pour contrôler le transformateur 137 afin de sélectionner la valeur de tension de sortie dudit transformateur 137 dans la plage de valeurs de tension prédéterminée. Le module de contrôle peut être commandé par un opérateur, par exemple à distance via un lien de communication sans fil (non représenté). La module de contrôle peut être configuré pour contrôler les semi-conducteurs de puissance du convertisseur alternatif-continu 110 et/ou du convertisseur continu-alternatif 130.

Le module de contrôle comprend de préférence un processeur (non représenté) apte à mettre en oeuvre un ensemble d'instructions permettant de réaliser ces fonctions.

### Première sortie d'alimentation électrique 140

La première sortie d'alimentation électrique 140 est configurée pour recevoir la tension électrique alternative délivrée par le convertisseur continu-alternatif 130 et pour fournir ladite tension électrique alternative à l'aéronef 20. A cette fin, la première sortie d'alimentation électrique 140 peut comprendre un câble adapté pour être relié à l'aéronef 20 et/ou un connecteur de sortie permettant de brancher un câble d'alimentation adapté à l'aéronef 20.

### Deuxième sorte d'alimentation 150

La deuxième sortie d'alimentation électrique 150 est reliée électriquement à la sortie du convertisseur alternatif-continu 110 afin de délivrer une tension continue au deuxième équipement électrique 30 lorsque ledit deuxième équipement électrique 30 est relié électriquement à ladite deuxième sortie d'alimentation électrique 150. A cette fin, la deuxième sortie d'alimentation électrique 150 peut comprendre un câble adapté pour être relié au deuxième équipement électrique 30 et/ou un connecteur de sortie permettant de brancher un câble d'alimentation adapté au deuxième équipement électrique 30.

La régulation de tension de charge du deuxième équipement électrique 30 peut être réalisée au moyen de la loi de commande des semi-conducteurs du convertisseur alternatif-continu 110 et/ou du convertisseur continu-alternatif 130. La loi de commande des semi-conducteurs permet de faire la tension de sortie en faisant varier la périodicité du découpage du signal électrique.

Lorsque l'unité de puissance au sol 10 n'est pas connectée à l'aéronef 20, la tension en sortie du convertisseur continu-alternatif 130 peut être elle aussi être ajustée par la loi de commande des semi-conducteurs dudit convertisseur continu-alternatif 130, pour augmenter la plage de tensions possibles.

### Deuxième équipement électrique 30

Le deuxième équipement électrique 30 est un équipement externe à l'unité de puissance au sol 10 qui comporte une unité de stockage d'énergie électrique (non représentée), comportant une ou plusieurs batteries électriques, qui peuvent être rechargée par une tension électrique continue. A cette fin, le deuxième équipement électrique 30 est configuré pour être relié électriquement à la deuxième sortie d'alimentation électrique 150 de l'unité de puissance au sol 10.

Le deuxième équipement électrique 30 peut par exemple un tracteur de type « push-back » à batterie électrique, une unité d'air conditionné (Air Conditioning Unit ou ACU), ou tout autre équipement électrique nécessitant une charge électrique à partir d'une tension électrique continue délivrée par l'unité de puissance au sol 10 via la deuxième sortie d'alimentation électrique 150.

### Aéronef 20

L'aéronef 20 comprend des dispositifs nécessitant d'être alimentés électriquement pendant le stationnement de l'aéronef 20. Cette alimentation électrique est réalisée par la fourniture d'une tension électrique alternative par l'unité de puissance au sol 10. Par exemple, cette tension peut être de 200 V à une fréquence de 400 Hz.

### Mise en oeuvre de l'invention

Tout d'abord, quel que soit le mode de réalisation, le module de stockage 120 doit être au moins en partie chargé dans une phase préliminaire.

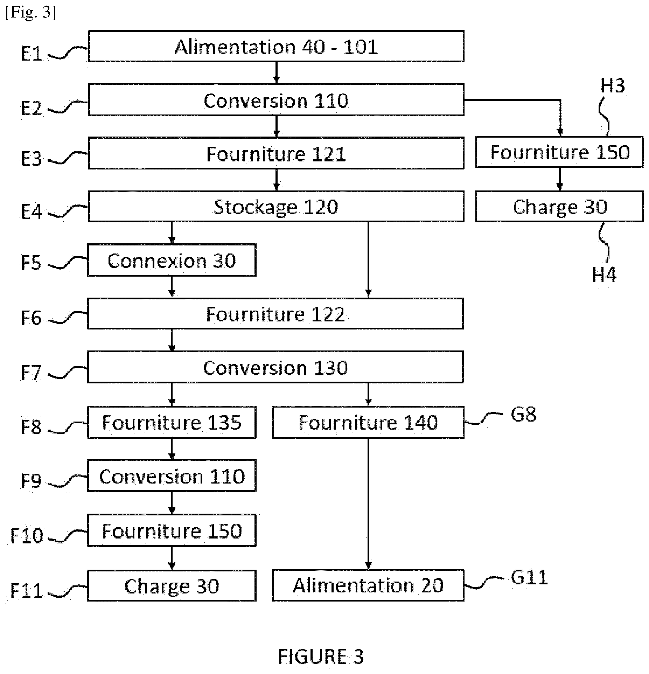

Pour ce faire, en référence à la [Fig.3], la source d'alimentation électrique externe 40 est tout d'abord reliée électriquement à l'entrée d'alimentation électrique 101 de l'unité de puissance au sol 10 afin de délivrer une tension électrique alternative d'entrée dans une étape E1, par exemple en 400 V / 50 Hz ou en 480 V / 60 Hz ou en 200 V / 400 Hz.

Le convertisseur alternatif-continu 110 convertit cette tension électrique alternative d'entrée en une tension électrique continue dans une étape E2 puis la délivre sur l'entrée de charge 121 du module de stockage 120 dans une étape E3 afin de le charger et stocker ainsi de l'énergie électrique dans une étape E4.

Dans un premier mode de réalisation, toujours en référence à la [Fig.3], l'unité de stockage d'énergie électrique du deuxième équipement électrique 30 est rechargée.

A cette fin, le deuxième équipement électrique 30 est tout d'abord relié électriquement à la deuxième sortie d'alimentation électrique 150 de l'unité de puissance au sol 10 dans une étape F5.

Le module de stockage 120 délivre alors dans une étape F6, via sa sortie de charge 122, une tension électrique continue, générée à partir d'énergie électrique stockée dans ledit module de stockage 120, au convertisseur continu-alternatif 130.

Le convertisseur continu-alternatif 130 convertit alors dans une étape F7 cette tension électrique continue en une tension électrique alternative et la fournit dans une étape F8, via la connexion électrique 135 au convertisseur alternatif-continu 110.

Le convertisseur alternatif-continu 110 convertit dans une étape F9 la tension électrique alternative reçue du convertisseur continu-alternatif 130 via la connexion électrique 135 en une tension électrique continue.

Le convertisseur alternatif-continu 110 délivre alors dans une étape F10 la tension électrique continue reçue sur la deuxième sortie d'alimentation électrique 150 afin de de charger électriquement l'unité de stockage d'énergie électrique du deuxième équipement électrique 30 dans une étape F11.

Simultanément (ou non) à la charge de l'unité de stockage d'énergie électrique du deuxième équipement électrique 30, l'unité de puissance au sol 10 peut avantageusement fournir une tension électrique alternative, délivrée en sortie du convertisseur continu-alternatif 130, sur la première sortie d'alimentation 140 (étape G8) afin d'alimenter électriquement l'aéronef 20 à partir de ladite tension électrique alternative (étape G11). La connexion électrique entre l'unité de puissance au sol 10 et l'aéronef 20 et l'alimentation électrique de l'aéronef 20 peuvent être réalisées avant, pendant ou après la charge du deuxième équipement électrique 30.

Dans une deuxième mode de réalisation, toujours en référence à la [Fig.3], la charge du deuxième équipement électrique 30, relié électriquement à l'unité de puissance au sol 10, est réalisée directement à partir d'énergie électrique fournie par la source d'alimentation électrique externe 40.

A cette fin, la source d'alimentation électrique externe 40 est reliée électriquement à l'entrée d'alimentation électrique 101 (étape E1) pour fournir une tension électrique alternative d'entrée reçue par le convertisseur alternatif-continu 110.

Le convertisseur alternatif-continu 110 convertit la tension électrique alternative d'entrée en une tension électrique continue (étape E2) et fournit ladite tension électrique continue sur la deuxième sortie d'alimentation électrique 150 dans une étape H3.

L'unité de puissance au sol 10 charge alors électriquement l'unité de stockage d'énergie électrique du deuxième équipement électrique 30 à partir de la tension électrique continue fournie sur la deuxième sortie d'alimentation électrique dans une étape H4.

Simultanément à la charge du deuxième équipement électrique 30, l'unité de puissance au sol 10 peut avantageusement alimenter électriquement un aéronef 20 à partir d'une tension électrique alternative délivrée en sortie du convertisseur continu-alternatif 130 via la première sortie d'alimentation électrique 140 (étape G11), ladite tension électrique alternative étant obtenue par conversion (étape F7), par le convertisseur continu-alternatif 130, d'une tension électrique continue fournir par le module de stockage 120 (étape F6). La connexion électrique entre l'unité de puissance au sol 10 et l'aéronef 20 et l'alimentation électrique de l'aéronef 20 peuvent être réalisées avant, pendant ou après l'alimentation de l'équipement électrique 30.

Le système décrit ci-avant à titre d'exemple comprend un transformateur 137 permettant de modifier la tension électrique alternative fournie par le convertisseur continu-alternatif 130 au-delà de ce que permet de manière efficace la loi de commande des semi-conducteurs des convertisseurs DC-AC et AC-DC. Ce transformateur 137 peut modifier la tension électrique alternative en une tension électrique alternative de valeur différente. De préférence, la tension de sortie du transformateur peut être multiple, c'est-à-dire comprise dans une plage de valeurs de tension prédéterminée, par exemple entre 70 et 900 V.

Dans les différents modes de réalisation, un module de contrôle (non représenté) peut être utilisé pour contrôler le transformateur 137 afin de sélectionner la valeur de tension de sortie dudit transformateur 137 dans la plage de valeurs de tension prédéterminée. Le module de contrôle peut être commandé par un opérateur, par exemple à distance via un lien de communication sans fil.

Le module d'alimentation électrique selon l'invention permet donc avantageusement d'alimenter à la fois un premier équipement électrique à partir d'une tension électrique alternative, par exemple un aéronef 20, et un deuxième équipement électrique 30 à partir d'une tension électrique continu, notamment simultanément, en particulier en rebouclant la sortie du convertisseur continu-alternatif 130 sur l'entrée du convertisseur alternatif-continu 130.

## Revendications

1. Unité de puissance au sol (10) pour aéronef (20), ladite unité de puissance au sol (10) comprenant une entrée d'alimentation électrique (101), un convertisseur alternatif-continu (110) relié électriquement à ladite entrée d'alimentation électrique (101), un module de stockage (120) d'énergie électrique relié électriquement audit convertisseur alternatif-continu (110), un convertisseur continu-alternatif (130) relié électriquement audit module de stockage (120) et une première sortie d'alimentation électrique (140) reliée électriquement audit convertisseur continu-alternatif (130), ledit convertisseur alternatif-continu (110) étant configuré pour convertir une tension électrique alternative en une tension électrique continue, ledit module de stockage (120) d'énergie électrique étant configuré pour stocker de l'énergie électrique à partir de la tension électrique continue fournie par le convertisseur alternatif-continu (110) et pour délivrer au convertisseur continu-alternatif (130) une tension électrique continue généré à partir d'énergie électrique stockée, le convertisseur continu-alternatif (130) étant configuré pour convertir la tension électrique continue reçue du module de stockage (120) en une tension électrique alternative disponible sur la première sortie d'alimentation électrique (140) pour alimenter ledit aéronef (20), l'unité de puissance au sol (10) étant **caractérisée en ce qu'**elle comprend en outre une connexion électrique (135), reliant la sortie du convertisseur continu-alternatif (130) à l'entrée du convertisseur alternatif-continu (110), et une deuxième sortie d'alimentation électrique (150) reliée électriquement à la sortie du convertisseur alternatif-continu (110), et **en ce que** le convertisseur alternatif-continu (110) est configuré pour convertir la tension électrique alternative reçue de la sortie du convertisseur continu-alternatif (130) en une tension électrique continue disponible sur ladite deuxième sortie d'alimentation électrique (150) afin de charger une batterie d'un équipement électrique (30).

2. Unité de puissance au sol (10) selon la revendication 1, dans laquelle le convertisseur alternatif-continu (110) est configuré pour délivrer sur la deuxième sortie d'alimentation électrique (150) une tension électrique continue générée à partir d'une tension électrique alternative reçue sur l'entrée d'alimentation électrique (101).

3. Unité de puissance au sol (10) selon l'une quelconque des revendications précédentes, configurée pour réaliser simultanément l'alimentation électrique de l'aéronef (20) à partir de la tension électrique alternative disponible sur la première sortie d'alimentation électrique (140) et la charge de la batterie de l'équipement électrique (30) à partir de la tension électrique continue disponible sur la deuxième sortie d'alimentation électrique (150).

4. Unité de puissance au sol (10) selon l'une quelconque des revendications précédentes, comprenant un transformateur (137) connecté en série sur la connexion électrique entre la sortie du convertisseur continu-alternatif (130) et l'entrée du convertisseur alternatif-continu (110), ledit transformateur (137) étant configuré pour modifier la valeur de la tension électrique alternative de sortie du convertisseur continu-alternatif (130) en une tension dont la valeur est comprise dans une plage de valeurs de tension prédéterminée.

5. Système (1) de charge électrique comprenant une unité de puissance au sol (10), selon l'une quelconque des revendications précédentes, et un équipement électrique (30), connecté électriquement à la deuxième sortie d'alimentation électrique (150).

6. Système (1) de charge électrique selon la revendication précédente, comprenant en outre un aéronef (20) connecté électriquement à la première sortie d'alimentation électrique (140).

7. Procédé d'alimentation électrique d'un équipement électrique (30) par une unité de puissance au sol (10) pour aéronef (20) selon l'une quelconque des revendications 1 à 4, ledit procédé comprenant les étapes de :
- fourniture (F6), par le module de stockage (120), au convertisseur continu-alternatif (130), d'une tension électrique continue générée à partir d'énergie électrique stockée dans ledit module de stockage (120),
- conversion (F7), par le convertisseur continu-alternatif (130), de la tension électrique continue reçue du module de stockage (120) en une tension électrique alternative,
- fourniture (F8), par le convertisseur continu-alternatif (130), via la connexion électrique (135), de ladite tension électrique alternative au convertisseur alternatif-continu (110),
- conversion (F9), par le convertisseur alternatif-continu (110), de la tension électrique alternative reçue du convertisseur continu-alternatif (130) en une tension électrique continue de charge de l'équipement électrique (30),
- fourniture (F10), par le convertisseur alternatif-continu (110), de ladite tension électrique continue sur la deuxième sortie d'alimentation électrique (140),
- charge électrique (F11) d'une batterie de l'équipement électrique (30) avec la tension électrique continue fournie sur la deuxième sortie d'alimentation électrique (150).

8. Procédé selon la revendication précédente, comprenant, simultanément à la fourniture par le convertisseur alternatif-continu (110) d'une tension électrique continue sur la deuxième sortie d'alimentation électrique (150), une étape de fourniture (G8) par le convertisseur continu-alternatif (130) de la tension électrique alternative sur la première sortie d'alimentation électrique (140) et une étape d'alimentation électrique (G11) de l'aéronef (20) à partir de la tension fournie sur la première sortie d'alimentation électrique (140).

9. Procédé selon l'une quelconque des revendications 7 ou 8, comprenant, préalablement à l'étape de fourniture, par le module de stockage (120), au convertisseur continu-alternatif (130), d'une tension électrique continue générée à partir d'énergie électrique stockée dans ledit module de stockage (120), les étapes de :
- réception (E1), via l'entrée d'alimentation électrique (101), d'une tension électrique alternative d'entrée fournie par une source d'alimentation électrique externe (40),
- conversion (E2), par le convertisseur alternatif-continu (110), de ladite tension électrique alternative d'entrée en une tension électrique continue,
- réception (E3), par le module de stockage (120), de ladite tension électrique continue,
- stockage (E4), par le module de stockage (120), de l'énergie électrique délivrée par ladite tension électrique continue reçue.

10. Procédé d'alimentation électrique d'un équipement électrique (30) par une unité de puissance au sol (10) pour aéronef (20) selon l'une quelconque des revendications 1 à 4, ledit procédé comprenant les étapes de :
- réception (E1), via l'entrée d'alimentation électrique (101), d'une tension électrique alternative d'entrée,
- conversion (E2), par le convertisseur alternatif-continu (110), de ladite tension électrique alternative d'entrée en une tension électrique continue,
- fourniture (H3), par le convertisseur alternatif-continu (110), de ladite tension électrique continue sur la deuxième sortie d'alimentation électrique (150),
- charge électrique (H4) de l'équipement électrique (30) à partir de la tension électrique continue fournie sur la deuxième sortie d'alimentation électrique (150).

11. Procédé selon la revendication précédente, comprenant, simultanément à la fourniture par le convertisseur alternatif-continu (110) d'une tension électrique continue sur la deuxième sortie d'alimentation électrique (150), une étape de fourniture, par le module de stockage (120), au convertisseur continu-alternatif (130), d'une tension électrique continue générée à partir d'énergie électrique stockée dans ledit module de stockage (120), une étape de conversion, par le convertisseur continu-alternatif, de la tension électrique continue reçue du module de stockage (120) en une tension électrique alternative, une étape de fourniture par le convertisseur continu-alternatif (130) de la tension électrique alternative sur la première sortie d'alimentation électrique (140) et une étape d'alimentation électrique de l'aéronef (20) à partir de la tension fournie sur la première sortie d'alimentation électrique (140).

## Patentansprüche

1. Bodenstromversorgungseinheit (10) für ein Luftfahrzeug (20), wobei die Bodenstromversorgungseinheit (10) einen Stromversorgungseingang (101), einen Wechselstrom-Gleichstrom-Wandler (110), der elektrisch mit dem Stromversorgungseingang (101) verbunden ist, ein Speichermodul (120) für elektrische Energie, das elektrisch mit dem Wechselstrom-Gleichstrom-Wandler (110) verbunden ist, einen Gleichstrom-Wechselstrom-Wandler (130), der elektrisch mit dem Speichermodul (120) verbunden ist und einen ersten Stromversorgungsausgang (140), der elektrisch mit dem Gleichstrom-Wechselstrom-Wandler (130) verbunden ist, umfasst, wobei der Wechselstrom-Gleichstrom-Wandler (110) ausgelegt ist, um eine elektrische Wechselspannung in eine elektrische Gleichspannung umzuwandeln, wobei das Speichermodul (120) für elektrische Energie ausgelegt ist, um elektrische Energie aus der von dem Wechselstrom-Gleichstrom-Wandler (110) gelieferten elektrischen Gleichspannung zu speichern und um dem Gleichstrom-Wechselstrom-Wandler (130) eine aus der gespeicherten elektrischen Energie erzeugte elektrische Gleichspannung bereitzustellen, wobei der Gleichstrom-Wechselstrom-Wandler (130) ausgelegt ist, um die von dem Speichermodul (120) empfangene elektrische Gleichspannung in eine elektrische Wechselspannung umzuwandeln, die am ersten Stromversorgungsausgang (140) verfügbar ist, um das Luftfahrzeug (20) zu versorgen, wobei die Bodenstromversorgungseinheit (10) **dadurch gekennzeichnet ist, dass** sie ferner eine elektrische Verbindung (135) umfasst, die den Ausgang des Gleichstrom-Wechselstrom-Wandlers (130) mit dem Eingang des Wechselstrom-Gleichstrom-Wandlers (110) verbindet, und einen zweiten Stromversorgungsausgang (150), der elektrisch mit dem Ausgang des Wechselstrom-Gleichstrom-Wandlers (110) verbunden ist, und dass der Wechselstrom-Gleichstrom-Wandler (110) ausgelegt ist, um die vom Ausgang des Gleichstrom-Wechselstrom-Wandlers (130) empfangene elektrische Wechselspannung in eine am zweiten Stromversorgungsausgang (150) verfügbare elektrische Gleichspannung umzuwandeln, um eine Batterie einer elektrischen Ausrüstung (30) aufzuladen.

2. Bodenstromversorgungseinheit (10) nach Anspruch 1, wobei der Wechselstrom-Gleichstrom-Wandler (110) ausgelegt ist, um am zweiten Stromversorgungsausgang (150) eine elektrische Gleichspannung bereitzustellen, die aus einer am Stromversorgungseingang (101) empfangenen elektrischen Wechselspannung erzeugt wird.

3. Bodenstromversorgungseinheit (10) nach einem der vorhergehenden Ansprüche, die ausgelegt ist, um gleichzeitig die Stromversorgung des Luftfahrzeugs (20) aus der am ersten Stromversorgungsausgang (140) verfügbaren elektrischen Wechselspannung und das Laden der Batterie der elektrischen Ausrüstung (30) aus der am zweiten Stromversorgungsausgang (150) verfügbaren elektrischen Gleichspannung durchzuführen.

4. Bodenstromversorgungseinheit (10) nach einem der vorhergehenden Ansprüche, die einen Transformator (137) umfasst, der in Reihe über die elektrische Verbindung zwischen dem Ausgang des Gleichstrom-Wechselstrom-Wandlers (130) und dem Eingang des Wechselstrom-Gleichstrom-Wandlers (110) geschaltet ist, wobei der Transformator (137) ausgelegt ist, um den Wert der elektrischen Wechselspannung am Ausgang des Gleichstrom-Wechselstrom-Wandlers (130) in eine Spannung zu ändern, deren Wert innerhalb eines vorbestimmten Spannungswertebereichs liegt.

5. Elektrisches Ladesystem (1), das eine Bodenstromversorgungseinheit (10) nach einem der vorhergehenden Ansprüche und eine elektrische Ausrüstung (30), die elektrisch mit dem zweiten Stromversorgungsausgang (150) verbunden ist, umfasst.

6. Elektrisches Ladesystem (1) nach vorhergehendem Anspruch, das ferner ein Luftfahrzeug (20) umfasst, das elektrisch mit dem ersten Stromversorgungsausgang (140) verbunden ist.

7. Verfahren zur elektrischen Versorgung einer elektrischen Ausrüstung (30) durch eine Bodenstromversorgungseinheit (10) für ein Luftfahrzeug (20) nach einem der Ansprüche 1 bis 4, wobei das Verfahren die folgenden Schritte umfasst:
- Liefern (F6), durch das Speichermodul (120), einer aus der in dem Speichermodul (120) gespeicherten elektrischen Energie erzeugten elektrischen Gleichspannung,
- Umwandeln (F7), durch den Gleichstrom-Wechselstrom-Wandler (130), der vom Speichermodul (120) empfangenen elektrischen Gleichspannung in eine elektrische Wechselspannung,
- Liefern (F8), durch den Gleichstrom-Wechselstrom-Wandler (130), der elektrischen Wechselspannung über die elektrische Verbindung (135) an den Wechselstrom-Gleichstrom-Wandler (110),
- Umwandeln (F9), durch den Wechselstrom-Gleichstrom-Wandler (110), der vom Gleichstrom-Wechselstrom-Wandler (130) empfangenen elektrischen Wechselspannung in eine elektrische Gleichspannung zum Laden der elektrischen Ausrüstung (30),
- Liefern (F10), durch den Wechselstrom-Gleichstrom-Wandler (110), der elektrischen Gleichspannung über den zweiten Stromversorgungsausgang (140),
- elektrisches Laden (F11) einer Batterie der elektrischen Ausrüstung (30) mit der über den zweiten Stromversorgungsausgang (150) gelieferten elektrischen Gleichspannung.

8. Verfahren nach vorhergehendem Anspruch, das gleichzeitig mit der Lieferung einer elektrischen Gleichspannung über den zweiten Stromversorgungsausgang (150) durch den Wechselstrom-Gleichstrom-Wandler (110) einen Schritt des Lieferns (G8) der elektrischen Wechselspannung über den ersten Stromversorgungsausgang (140) durch den Gleichstrom-Wechselstrom-Wandler (130) und einen Schritt der Stromversorgung (G11) des Luftfahrzeugs (20) aus der über den ersten Stromversorgungsausgang (140) gelieferten Spannung umfasst.

9. Verfahren nach einem der Ansprüche 7 oder 8, das vor dem Schritt des Lieferns einer aus der in dem Speichermodul (120) gespeicherter elektrischer Energie erzeugten elektrischen Gleichspannung durch das Speichermodul (120) an den Gleichstrom-Wechselstrom-Wandler (130) die folgenden Schritte umfasst:
- Empfangen (E1), über den Stromversorgungseingang (101), einer elektrischen Eingangs-Wechselspannung, die von einer externen Stromversorgungsquelle (40) geliefert wird,
- Umwandeln (E2), durch den Wechselstrom-Gleichstrom-Wandler (110), der elektrischen Eingangs-Wechselspannung in eine elektrische Gleichspannung,
- Empfangen (E3), durch das Speichermodul (120), der elektrischen Gleichspannung,
- Speichern (E4), durch das Speichermodul (120), der von der empfangenen elektrischen Gleichspannung abgegebenen elektrischen Energie.

10. Verfahren zur elektrischen Versorgung einer elektrischen Ausrüstung (30) durch eine Bodenstromversorgungseinheit (10) für ein Luftfahrzeug (20) nach einem der Ansprüche 1 bis 4, wobei das Verfahren die folgenden Schritte umfasst: :
- Empfangen (E1), über den Stromversorgungseingang (101), einer elektrischen Eingangs-Wechselspannung,
- Umwanden (E2), durch den Wechselstrom-Gleichstrom-Wandler (110), der elektrischen Eingangs-Wechselspannung in eine elektrische Gleichspannung,
- Liefern (H3), durch den Wechselstrom-Gleichstrom-Wandler (110), der elektrischen Gleichspannung über den zweiten Stromversorgungsausgang (150),
- elektrisches Laden (H4) der elektrischen Ausrüstung (30) aus der über den zweiten Stromversorgungsausgang (150) gelieferten elektrischen Gleichspannung.

11. Verfahren nach vorhergehendem Anspruch, das gleichzeitig mit der Lieferung einer elektrischen Gleichspannung über den zweiten Stromversorgungsausgang (150) durch den Wechselstrom-Gleichstrom-Wandler (110) einen Schritt des Lieferns einer aus der in dem Speichermodul (120) gespeicherter elektrischer Energie erzeugten elektrischen Gleichspannung durch das Speichermodul (120) an den Gleichstrom-Wechselstrom-Wandler (130), einen Schritt der Umwandlung, durch den Gleichstrom-Wechselstrom-Wandler, der von dem Speichermodul (120) empfangenen elektrischen Gleichspannung in eine elektrische Wechselspannung, einen Schritt des Lieferns der elektrischen Wechselspannung durch den Gleichstrom-Wechselstrom-Wandler (130) über den ersten Stromversorgungsausgang (140) und einen Schritt der Stromversorgung des Luftfahrzeugs (20) aus der über den ersten Stromversorgungsausgang (140) gelieferten Spannung umfasst.

## Claims

1. A ground power unit (10) for an aircraft (20), said ground power unit (10) comprising a power supply input (101), an AC-to-DC converter (110) electrically connected to said power supply input (101), an electrical energy storage module (120) electrically connected to said AC-to-DC converter (110), a DC-to-AC converter (130) electrically connected to said storage module (120) and a first power supply output (140) electrically connected to said DC-to-AC converter (130), said AC-to-DC converter (110) being configured to convert an AC electrical voltage into a DC electrical voltage, said electrical energy storage module (120) being configured to store electrical energy from the DC electrical voltage supplied by the AC-to-DC converter (110) and to deliver the DC-to-AC converter (130) with a DC electrical voltage generated from stored electrical energy, the DC-to-AC converter (130) being configured to convert the DC electrical voltage received from the storage module (120) into an AC electrical voltage available on the first power supply output (140) for powering said aircraft (20), the ground power unit (10) being **characterized in that** it further comprises an electrical connection (135), connecting the output of the DC-to-AC converter (130) to the input of the AC-to-DC converter (110), and a second power supply output (150) electrically connected to the output of the AC-to-DC converter (110), and **in that** the AC-to-DC converter (110) is configured to convert the AC electrical voltage received from the output of the DC-to-AC converter (130) into a DC electrical voltage available on said second power supply output (150) in order to charge a battery of an electrical equipment (30).

2. The ground power unit (10) according to claim 1, wherein the AC-to-DC converter (110) is configured to deliver to the second power supply output (150) a DC electrical voltage generated from an AC electrical voltage received at the power supply input (101).

3. The ground power unit (10) according to any one of the preceding claims, configured to simultaneously supply power to the aircraft (20) from the AC electrical voltage available on the first power supply output (140) and the charge of the battery of the electrical equipment (30) from the DC electrical voltage available on the second power supply output (150).

4. The ground power unit (10) according to any one of the preceding claims, comprising a transformer (137) connected in series with the electrical connection between the output of the DC-to-AC converter (130) and the input of the AC-to-DC converter (110), said transformer (137) being configured to modify the value of the AC electrical output voltage of the DC-to-AC converter (130) to a voltage whose value lies within a predetermined range of voltage values.

5. An electric charging system (1) comprising a ground power unit (10), according to any one of the preceding claims, and an electrical equipment (30), electrically connected to the second power supply output (150).

6. The electric charging system (1) according to the preceding claim, further comprising an aircraft (20) electrically connected to the first power supply output (140).

7. A method of supplying electrical power to an electrical equipment (30) from a ground power unit (10) for an aircraft (20) according to any one of claims 1 to 4, said method comprising the steps of:
- supplying (F6), by the storage module (120), to the DC-to-AC converter (130), of a DC electrical voltage generated from electrical energy stored in said storage module (120),
- converting (F7), by the DC-to-AC converter (130), the DC electrical voltage received from the storage module (120) into an AC electrical voltage,
- supplying (F8), by the DC-to-AC converter (130), via the electrical connection (135), said AC electrical voltage to the AC-to-DC converter (110),
- converting (F9), by the AC-to-DC converter (110), the AC electrical voltage received from the DC-to-AC converter (130) into a DC electrical voltage for charging the electrical equipment (30),
- supplying (F10), by the AC-to-DC converter (110), said DC electrical voltage to the second power supply output (140),
- electrically charging (F11) a battery of the electrical equipment (30) with the DC electrical voltage supplied on the second power supply output (150).

8. The method according to the preceding claim, comprising, simultaneously with the supply by the AC-to-DC converter (110) of a DC electrical voltage on the second power supply output (150), a step of supplying (G8), by the DC-to-AC converter (130), of the AC electrical voltage on the first power supply output (140) and a step of power supplying (G11) of the aircraft (20) from the voltage supplied on the first power supply output (140).

9. The method according to any one of claims 7 or 8, comprising, prior to the step of supplying, by the storage module (120), to the DC-AC converter (130), a DC electrical voltage generated from electrical energy stored in said storage module (120), the steps of:
- receiving (E1), via the power supply input (101), an input AC electrical voltage supplied by an external power supply source (40),
- converting (E2), by the AC-to-DC converter (110), said input AC electrical voltage into a DC electrical voltage,
- receiving (E3), by the storage module (120), said DC electrical voltage,
- storing (E4), by the storage module (120), of the electrical energy delivered by said DC electrical voltage received.

10. The method of supplying electrical power to an electrical equipment (30) from a ground power unit (10) for an aircraft (20) according to any one of claims 1 to 4, said method comprising the steps of:
- receiving (E1), via the power supply input (101), an input AC electrical voltage,
- converting (E2), by the AC-to-DC converter (110), said input AC electrical voltage into a DC electrical voltage,
- supplying (H3), by the AC-to-DC converter (110), said DC electrical voltage to the second power supply output (150),
- electrically charging (H4) the electrical equipment (30) from the DC electrical voltage supplied on the second power supply output (150).

11. The method according to the preceding claim, comprising, simultaneously with the supply by the AC-to-DC converter (110) of a DC electrical voltage on the second power supply output (150), a step of supplying, by the storage module (120), to the DC-to-AC converter (130), of a DC electrical voltage generated from electrical energy stored in said storage module (120), a step of converting, by the DC-AC converter, of the DC electrical voltage received from the storage module (120) into an AC electrical voltage, a step of supplying by the DC-to-AC converter (130) the AC electrical voltage on the first power supply output (140) and a step of supplying electrical power to the aircraft (20) from the voltage supplied on the first power supply output (140).
